# EUROPÄISCHE PATENTSCHRIFT

(11) **EP 0 339 304 B1**
(45) Veröffentlichungstag und Bekanntmachung des Hinweises auf die Patenterteilung: **27.07.1994**
(21) Anmeldenummer: 89105842.2
(22) Anmeldetag: 04.04.1989
(51) Int. Cl.: F16C 33/10, F16C 9/04

(54) **Wellenlager, insbesondere als Grund- und Pleuellager für Dieselmotoren**
Shaft-pirot, especially main bearing and connecting rod bearing for Diesel motor
Palier pour axe, notamment palier principal et coussinet de bielle pour moteur diesel

(30) Priorität: 27.04.1988 DE 3814159
(43) Veröffentlichungstag der Anmeldung: 02.11.1989
(73) Patentinhaber: Krupp MaK Maschinenbau GmbH, 24159 Kiel (DE)
(72) Erfinder: Heintze, Wolfgang, D-2300 Kronshagen (DE)
(74) Vertreter: Hansmann, Dierk, Dipl.-Ing.

(56) Entgegenhaltungen:
- DE-A- 3 519 984
- DE-A- 3 614 532
- DE-B- 2 136 935
- US-A- 4 553 857
- Dubbel, Taschenbuch für den Maschinenbau, 14. Auflage, Springer-Verlag, Berlin, Heidelberg New-York, 1981, Seite 432.

## Beschreibung

Die Erfindung betrifft ein Wellenlager für Motoren, bestehend aus einem Schalenkörper mit zwei Zonen, wobei die eine radial geringer belastete Zone gegenüber der weiteren stärker belasteten Zone mehrere, den Schalenkörper durchdringende Öffnungen für eine Schmierölzufuhr aufweist, die unmittelbar bis zu einer lagernden Welle durchgeführt sind, wobei die stärker belastete Zone ohne Schmierölzufuhr ausgebildet ist. Ein derartiges Lager ist aus dem Buch "Dubbel, Taschenbuch für den Maschinenbau", 14. Auflage, Springer Verlag, Berlin, Heidelberg, New York, 1981, Seite 432 bekannt.

Weiter sind Wellenlager bekannt, die aus zwei Halbschalen bestehen.

Bei derartigen vorbekannten Wellenlagern ist es üblich, daß die in der weniger belasteten Halbschale vorgesehene Schmierölzufuhr über eine nutförmige in Umfangsrichtung verlaufende Ausnehmung in der Lauffläche des Schalkörpers erfolgt, um eine Vergleichmäßigung der Ölzufuhr und der Ölverteilung zu erreichen. Diese vorbekannte nutförmige Ausnehmung, die im unmittelbaren Mündungsbereich von Öldurchtrittsbohrungen liegt, führt in nachteiliger Weise zu einer empfindlichen Störung der Tragfähigkeit des Lagers. Ferner kommt es an der Welle zu einem ungleichmäßigen Verschleiß, der bis zu einer Kammbildung an der Welle in dem der nutförmigen Ausnehmung gegenüberliegenden Abschnitt der Welle führen kann. Diese Kammbildung wird noch beschleunigt, wenn, wie im Schwerölbetrieb häufig vorkommend, stark verschmutzte Schmieröle verwendet werden. Zwar kommt es bei der Lagerpaarung aufgrund des Betriebsverschleißes nicht sofort zu einem Ausfall, weil die Verschleißerscheinungen zwischen den Lagerschalen und der Welle sich zwangsläufig entsprechend aufeinander einstellen.

Die Standzeit des Wellenlagers wird jedoch erheblich verkürzt. Wenn nach Ablauf dieser verkürzten Standzeit dann ein neues Lager eingebaut wird, führt ein auf der Welle vorhandener Kamm dazu, daß es an der vergleichsweise stärker belasteten Halbschale ohne Nutausnehmung zu einem Eindrücken und damit zu einem beschleunigten Verschleiß kommt, der im Extremfall zu einem Lagerschaden führt.

Zur Beseitigung dieser ungünstigen Erscheinung wurde vorgeschlagen eine nutförmige Ausnehmung in beiden Halbschalen vorzusehen. Dies führt jedoch zu einem erheblichen Verlust an Tragfähigkeit und stellt insbesondere für hochbelastete Lager keine Lösungsmöglichkeit dar.

Der Erfindung liegt die Aufgabe zugrunde, ein Wellenlager der eingangs genannten Gattung derart weiterzubilden, daß im Lagerbereich ein gleichmäßiger Verschleiß erfolgt.

Erfindungsgemäß wird diese Aufgabe durch die im Patentanspruch 1 gekennzeichneten Merkmale gelöst. Bevorzugte Merkmale, die die Erfindung vorteilhaft weiterbilden, sind in den nachgeordneten Patentansprüchen genannt.

Aufgrund der erfindungsgemäßen Ausgestaltung des Wellenlagers, bei dem der Schalenkörper der geringer belasteten Halbschale unmittelbar bis zu der Welle erreichende Durchtrittsöffnungen für die Schmierölzufuhr aufweist, entfällt in vorteilhafter Weise die nutförmige Ausnehmung an der vergleichsweise geringer belasteten Halbschale, wobei kein Bereich bevorzugten Verschleißes vorliegt.

Die Durchtrittsöffnungen durch den Schalenkörper der vergleichsweise geringer belasteten Halbschale können zur Anpassung an die jeweiligen Lager- und Schmieranforderungen in einzelnen Bereichen oder gleichmäßig verteilt vorgesehen sein. Bevorzugt sind die Durchtrittsöffnungen umfangsseitig über den Schalenkörper verteilt, wobei vorzugsweise eine Verteilung in wenigstens zwei parallelen Reihen vorgesehen ist. Hierdurch läßt sich vorteilhaft eine Vergleichmäßigung der Schmierölzufuhr erreichen.

Nach einer weiteren bevorzugten Ausgestaltung der Erfindung weisen nebeneinander liegende Durchtrittsöffnungen jeder Reihe voneinander ein konstanten Abstand auf, wobei weiterhin vorzugsweise der Abstand benachbarter Durchtrittsöffnungen bei allen Durchtrittsöffnungs-Reihen gleichgroß ist. Dies hat nicht nur fertigungstechnische Vorteile sondern trägt ebenfalls zur Verschleiß mindernden Vergleichmäßigung der Schmierölzufuhr bei. Insbesondere, wenn gemäß einer bevorzugten Ausgestaltung der Erfindung die Durchtrittsöffnungen zweier benachbarter Öffnungsreihen zueinander versetzt angeordnet sind.

Bevorzugt wird weiterhin eine Ausgestaltung, bei der zwei benachbarte Öffnungsreihen paarweise einander zugeordnet und derart beabstandet sind, daß die Durchtrittsöffnungen wechselseitig in einem gemeinsamen Überlappungsbereich eingreifen, wobei der wechselseitige Eingriff der Durchtrittsöffnungen vorzugsweise über eine Öffnungsreihenmittellinie der benachbarten Öffnungsreihe vorgesehen ist. Mit einer derartigen Verteilungskonfiguration wird besonders wirkungsvoll einem ungleichmäßigen Verschleiß begegnet, da es bei der Drehung der Welle zu einer hinsichtlich der Menge, der Fläche und des Druckes günstigen Verteilung des zugeführten Schmieröles und einer daraus reflektierenden vorteilhaften Vergleichmäßigung der Schmierung kommt.

Die Durchtrittsöffnungen weisen vorzugsweise alle dieselbe Querschnittform auf. Günstig ist es hinsichtlich des angestrebten Zweckes, wenn jede Durchtrittsöffnung bevorzugt einen annähernd dreiecksförmigen Querschnitt mit abgerundeten Ecken aufweise, wobei insbesondere jede Durchtrittsöffnung einen annähernd gleichschenkligen dreiecksförmigen Querschnitt besitzt, bei dem die an die beiden gleichen Schenkel anschließende abgerundete Ecke benachbarter paarweise einander zugeordneter Öffnungsreihen zueinander gerichtet sind. Vorzugsweise schließen die beiden gleichen Schenkel des im wesentlichen dreiecksförmigen Querschnitts jeder Durchtrittsöffnung einen stumpfen Winkel ein. Bei dieser Konfiguration wird durch die schräge Einstellung der verbleibenden Stege vorteilhaft die Kavitationsgefahr reduziert, weil der Schmierölstrom schleichend reduziert wird und sich wieder erhöht. Außerdem trägt diese bevorzugte Ausgestaltung zu einer zumindest tendenzmäßigen Erhöhung der Tragfähigkeit des Wellenlagers bei.

Nachfolgend wird die Erfindung anhand eines Ausführungsbeispiels unter Bezugnahme auf die beigefügten Zeichnungen näher erläutert. Es zeigen:
- Fig. 1: eine schematisierte Längsschnittansicht durch ein Wellenlager,
- Fig. 2: einen Schnitt gemäß Linie II-II der Fig.1 im vergrößerten Maßstab,
- Fig. 3: eine abgewickelte Darstellung einer Draufsicht auf eine Halbschale mit reihenförmig angeordneten Durchtrittsöffnungen und
- Fig. 4: eine vergrößerte Ausschnittsansicht auf Durchtrittsöffnungen zweier benachbarter Öffnungsreihen.

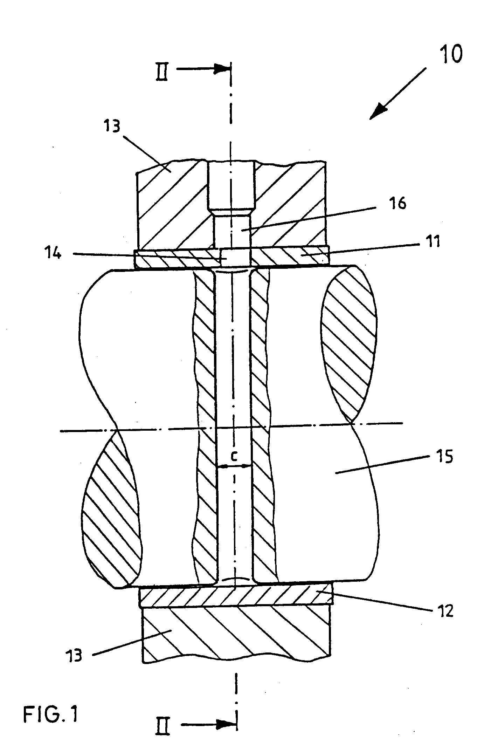

In Fig. 1 ist ein Wellenlager 10 im Längsschnitt dargestellt, das aus einer oberen Halbschale 11 und einer unteren Halbschale 12 zusammengesetzt ist. Die Halbschalen 11 und 12 sind in einem Lagerabschnitt eines bei 13 angedeuteten Gehäuses in nicht dargestellter Weise haltend aufgenommen. Die obere Halbschale 11 ist geringer belastet als die untere Halbschale 12. In der oberen Halbschale sind über den Umfang verteilte Durchtrittsöffnungen 14 gebildet, die unmittelbar bis zu einer in den Halbschalen gelagerten Welle 15 reichen und die seitens des Gehäuses 13 von einer nur ausschnittsweise dargestellten Schmierölzufuhreinrichtung 16 mit Schmieröl versorgt werden.

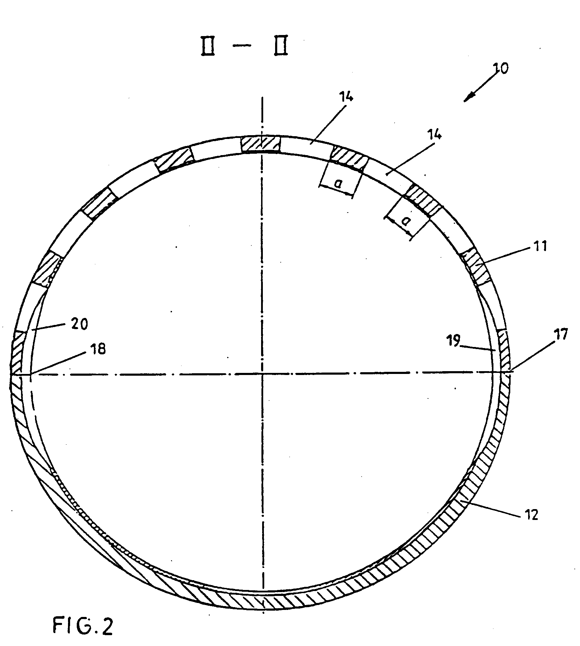

Der in Fig. 2 dargestellte Schnitt ist durch eine umfangsseitig verlaufende Öffnungsreihe der Durchtrittsöffnungen 14 geführt und zeigt nur die Gestaltung der oberen Halbschale 11 und der unteren Halbschale 12 des Wellenlagers 10, die an Trennstellen 17 und 18 bündig einander schließen. Die Durchtrittsöffnungen 14 sind über den Umfang in einer Reihe über die obere Halbschale 11 verteilt. Der Abstand a von einander benachbarter Durchtrittsöffnungen 14 in der Öffnungsreihe ist konstant. Es ist hierbei weiterhin jeweils eine taschenartige Ausnehmung 19 bzw. 20 im Anschlußbereich 17 bzw. 18 der Halbschalen 11 und 12.

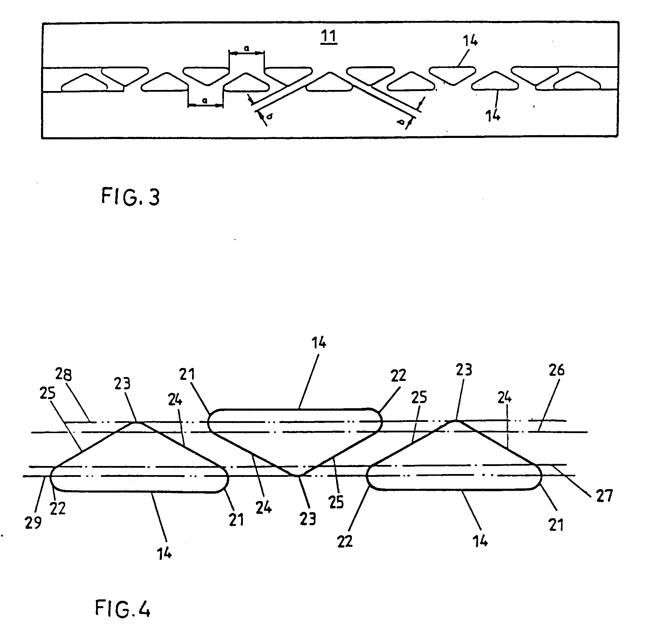

Wie aus Fig. 3 und Fig. 4 zu entnehmen ist, sind die Durchtrittsöffnungen 14 über die Halbschale 11 umfangsseitig in zwei zueinander parallelen Reihen verteilt. Alle Durchtrittsöffnungen 14 besitzen dieselbe Querschnittsform, nämlich einen annähernd dreieckigen Querschnitt mit abgerundeten Ecken 21, 22 und 23. Es handelt sich um annähernd gleichschenklige Dreiecke mit Schenkelabschnitten 24 und 25, die an die abgerundete Ecke 23 anschließen. Die Orientierung der Durchtrittsöffnungen ist dabei so getroffen, daß die Durchtrittsöffnung 14 wechselseitig mit ihrer abgerundeten Ecke 23 über eine Öffnungsreihenmittellinie 26 bzw. 27 der benachbarten Öffnungsreihe hinaus eingreifen. Der Überlappungsbereich ist in Fig. 4 durch die strichpunktierten Linien 28 und 29 begrenzt, die jeweils durch die abgerundete Ecke 23 der jeweiligen Öffnungsreihe der Durchtrittsöffnungen verlaufen.

Zwischen den Seiten 25,25 bzw. 24,24 der wechselseitig einander zugeordneten Durchtrittsöffnungen zweier Öffnungsreihen verbleibt somit ein zur Umfangsdrehrichtung der Welle 15 schräggestellter Steg, der die Gefahr einer Kavitation wirksam verringert.

Bei den dargestellten Austrittsöffnungen 14 schließen die beiden gleichen Schenkel 24 und 25 einen stumpfen Winkel ein, der etwa 120° beträgt. Die Kanten der Ränder der Durchtrittsöffnung 14 sind gebrochen.

## Patentansprüche

1. Wellenlager für Motoren, bestehend aus einem Schalenkörper mit zwei Zonen (11,12), wobei die eine radial geringer belastete Zone (11) gegenüber der weiteren stärker belasteten Zone (12) mehrere, den Schalenkörper durchdringende Öffnungen (14) für eine Schmierölzufuhr aufweist, die unmittelbar bis zu einer zu lagernden Welle (15) durchgeführt sind, wobei die stärker belastete Zone (12) ohne Schmierölzufuhr ausgebildet ist, dadurch gekennzeichnet, daß der Schalenkörper (10) aus zwei Halbschalen (11,12) besteht, die die jeweiligen Zonen bilden, und die Durchtrittsöffnungen (14) in der radial geringer belasteten Halbschale (11) eine annähernd dreieckförmige Gestalt mit abgerundeten Ecken (21,22,23) aufweisen und in dieser Halbschale (11) umfangsseitig derart verteilt angeordnet sind, daß zwischen unmittelbar benachbarten Öffnungen (14) ein zur Drehrichtung der Welle (15) schräg verlaufender Steg mit annähernd konstanter Breite (b) gebildet wird.

2. Wellenlager nach Anspruch 1, dadurch gekennzeichnet, daß die Durchtrittsöffnungen (14) im Schalenkörper der Halbschale (11) über den Umfang radial in wenigstens zwei parallelen Reihen (26,27) angeordnet sind.

3. Wellenlager nach Anspruch 2, dadurch gekennzeichnet, daß nebeneinander liegende Durchtrittsöffnungen (14) jeder Reihe (26,27) voneinander einen konstanten Abstand (a) zueinander aufweisen.

4. Wellenlager nach einem der Ansprüche 2 oder 3, dadurch gekennzeichnet, daß der Abstand (a) benachbarter Durchtrittsöffnungen (14) in jeder Öffnungsreihe (26,27) gleich groß ist.

5. Wellenlager nach einem der Ansprüche 2 bis 4, dadurch gekennzeichnet, daß die Durchtrittsöffnungen (14) jeder Öffnungsreihe (26,27) zueinander versetzt angeordnet sind.

6. Wellenlager nach einem der Ansprüche 2 bis 5, dadurch gekennzeichnet, daß zwei benachbarte Öffnungsreihen (26,27) paarweise einander zugeordnet und derart beabstandet sind, daß die Durchtrittsöffnungen (14) wechselseitig in einen gemeinsamen Überlappungsbereich eingreifen.

7. Wellenlager nach Anspruch 6, dadurch gekennzeichnet, daß der wechselseitige Eingriff der Durchtrittsöffnungen (14) über eine Öffnungsreihenmittellinie (26,27) der benachbarten Öffnungsreihe hinaus vorgesehen ist.

8. Wellenlager nach einem der vorangehenden Ansprüche, dadurch gekennzeichnet, daß alle Durchtrittsöffnungen (14) eine gleiche Querschnittsform aufweisen.

9. Wellenlager nach Anspruch 8, dadurch gekennzeichnet, daß jede Durchtrittsöffnung (14) einen annähernd gleichschenkligen dreieckigen Querschnitt mit abgerundeten Ecken (21,22,23) besitzt, wobei die an die beiden gleichen Schenkel (24,25) anschließende abgerundete Ecke (23) benachbarter Durchtrittsöffnungen (14) von paarweise einander zugeordneten Öffnungsreihen (26,27) zueinander gerichtet sind.

10. Wellenlager nach Anspruch 9, dadurch gekennzeichnet, daß die beiden Schenkel (24,25) einen stumpfen Winkel einschließen.

## Claims

1. Shaft bearing for motors, comprising a shell-type body having two zones (11, 12), with the one, radially less loaded zone (11) opposite the other, more intensely loaded zone (12) having a plurality of openings (14) for a lubricating oil supply which penetrate the shell-type body and extend directly up to a shaft (15) to be supported, with the more intensely loaded zone (12) being constructed without a lubricating oil supply, characterized in that the shell-type body (10) comprises two half shells (11, 12) which form the respective zones, and the through openings (14) in the radially less loaded half shell (11) are substantially triangular in shape with rounded corners (21, 22, 23) and are disposed in said half shell (11) distributed over the periphery in such a way that a web extending obliquely relative to the direction of rotation of the shaft (15) and having a substantially constant width (b) is formed between directly adjacent openings (14).

2. Shaft bearing according to claim 1, characterized in that the through openings (14) in the shell-type body of the half shell (11) are disposed over the periphery radially in at least two parallel rows (26, 27).

3. Shaft bearing according to claim 2, characterized in that adjacent-lying through openings (14) of each row (26, 27) are a constant distance (a) apart from one another.

4. Shaft bearing according to one of claims 2 or 3, characterized in that the distance (a) between adjacent through openings (14) is equally great in each row of openings (26, 27).

5. Shaft bearing according to one of claims 2 to 4, characterized in that the through openings (14) of each row of openings (26, 27) are arranged offset relative to one another.

6. Shaft bearing according to one of claims 2 to 5, characterized in that two adjacent rows of openings (26, 27) are paired with one another and are spaced apart in such a way that the through openings (14) engage in alternate directions into a common overlap region.

7. Shaft bearing according to claim 6, characterized in that the engagement of the through openings (14) in alternate directions beyond a row-of-openings centre line (26, 27) of the adjacent row of openings is provided.

8. Shaft bearing according to one of the preceding claims, characterized in that all of the through openings (14) have an identical cross-sectional shape.

9. Shaft bearing according to claim 8, characterized in that each through opening (14) has a substantially equilateral triangular cross-section with rounded corners (21, 22, 23), with the rounded corner (23) connecting the two equal sides (24, 25) of adjacent through openings (14) of paired rows of openings (26, 27) being directed one towards the other.

10. Shaft bearing according to claim 9, characterized in that the two sides (24, 25) enclose an obtuse angle.

## Revendications

1. Palier pour arbre pour moteurs comportant un corps en coquille qui se compose de deux zones (11,12), l'une de ces zones (11), chargée radialement dans une mesure relativement faible, opposée a l'autre zone (12), chargée plus fortement, présentant plusieurs ouvertures (14) traversant de part en part le corps en coquille pour une amenée d'huile de graissage, ouvertures qui sont percées de façon à atteindre immédiatement le niveau d'un arbre (15) à monter, la zone (12), chargée plus fortement, étant prévue sans amenée d'huile de graissage, le palier étant caractérisé en ce que le corps en coquille (10) se compose de deux demi-coquilles (11, 12) qui forment les zones respectives et en ce que les ouvertures de passage (14), formées dans la demi-coquille (11), chargée radialement dans la faible mesure, présente une forme à peu près triangulaire, avec coins arrondis (21, 22, 23), et sont prévues réparties a la périphérie de cette demi-coquille (11) de telle sorte qu'entre des ouvertures (14) immédiatement voisines l'une de l'autre, il soit formé une partie de cloisonnement, de largeur à peu près constante (b), suivant une allure en oblique par rapport au sens de rotation de l'arbre (15).

2. Palier pour arbre suivant la revendication 1, caractérisé en ce que les ouvertures de passage (14) du corps en coquille formées dans la demi-coquille (11) sont disposées radialement à la périphérie en au moins deux séries (26, 27) parallèles l'une à l'autre.

3. Palier pour arbre suivant la revendication 2, caractérisé en ce que les ouvertures de passage (14) voisines l'une de l'autre de chacune des séries (26, 27) présentent l'une par rapport à l'autre une distance d'écartement constante (a).

4. Palier pour arbre suivant l'une ou l'autre des revendications 2 et 3, caractérisé en ce que la distance d'écartement (a) des ouvertures de passage (14) voisines l'une de l'autre de chacune des séries d'ouvertures (26, 27) est de grandeur égale.

5. Palier pour arbre suivant l'une quelconque des revendications 2 à 4, caractérisé en ce que les ouvertures de passage (14) des deux séries (26, 27) d'ouvertures sont prévues décalées les unes par rapport aux autres.

6. Palier pour arbre suivant l'une quelconque des revendications 2 à 5, caractérisé en ce que deux séries voisines (26, 27) d'ouvertures sont adjointes l'une à l'autre par paires et sont prévues à une distance d'écartement telle que les ouvertures de passage (4) s'engagent en alternance dans une zone de chevauchement commune.

7. Palier pour arbre suivant la revendication 6 caractérisé en ce que l'engagement en alternance des ouvertures de passage (14) est prévu au-delà d'une ligne médiane de séries d'ouvertures (26, 27) de la série d'ouvertures voisines.

8. Palier pour arbre suivant l'une quelconque des revendications précédentes caractérisé en ce que toutes les ouvertures de passage (14) présentent une forme de section transversale identique.

9. Palier pour arbre suivant la revendication 8 caractérisé en ce que chaque ouverture de passage (14) a une section transversale en triangle approximativement isocèle à coins arrondis (21, 22, 23), les coins arrondis (23) compris entre les deux côtés égaux (24, 25) d'ouvertures de passage voisines (14) de séries d'ouvertures (26, 27) adjointes l'une à l'autre par paires étant dirigées l'un vers l'autre.

10. Palier pour arbre suivant la revendication 9, caractérisé en ce que les deux côtés (24, 25) forment entre eux un angle obtus.
